# EUROPÄISCHE PATENTANMELDUNG

(11) **EP 4 249 428 A1**
(43) Veröffentlichungstag der Anmeldung: **27.09.2023**
(21) Anmeldenummer: 22020118.0
(22) Anmeldetag: 21.03.2022
(51) Int. Cl.: C01B 3/34, C01B 3/38, B01J 8/06, B01J 19/08

(54) **VERFAHREN UND ANLAGE ZUR HERSTELLUNG EINES ZUMINDEST WASSERSTOFF ENTHALTENDEN PRODUKTGASES DURCH DAMPFREFORMIERUNG**

(71) Anmelder: Linde GmbH, 82049 Pullach (DE)
(72) Erfinder: Schödel, Nicole, 82049 Pullach (DE); Ranke, Harald, 82049 Pullach (DE); Müller-Thorwart, Ole, 82049 Pullach (DE); Peschel, Andreas, 82049 Pullach (DE)
(74) Vertreter: Fischer, Werner

(57) **Zusammenfassung**

Ein Verfahren (100, 200) zur Herstellung eines zumindest Wasserstoff enthaltenden Produktgases durch Dampfreformierung wird vorgeschlagen, bei dem ein Dampf und einen oder mehrere Kohlenwasserstoffe als Reaktanden enthaltender Prozessgasstrom durch eine Reaktoranordnung (10) geführt und in der Reaktoranordnung (10) zumindest zum Teil elektrisch erwärmt wird, wobei die Reaktoranordnung (10) mehrere Heizzonen (15-19) aufweist, in denen der Prozessgasstrom auf in Strömungsrichtung ansteigende Temperaturniveaus erwärmt wird, und wobei zumindest eine der Heizzonen (15-19) für die elektrische Erwärmung des Prozessgasstroms eingerichtet ist. Eine entsprechende Anlage ist ebenfalls Gegenstand der Erfindung.

## Beschreibung

Die Erfindung betrifft ein Verfahren und eine Anlage zur Herstellung eines zumindest Wasserstoff enthaltenden Produktgases durch Dampfreformierung.

### Hintergrund

Die Erzeugung von Synthesegas bzw. Wasserstoff erfolgt derzeit noch überwiegend auf Basis von Kohlenwasserstoffen, beispielsweise durch Dampfreformierung von Erdgas (Steam Methane Reforming, SMR). Da derartige Verfahren einen beträchtlichen Kohlendioxid-Fußabdruck aufweisen, wird der entsprechend bereitgestellte Wasserstoff auch als "grauer" Wasserstoff bezeichnet.

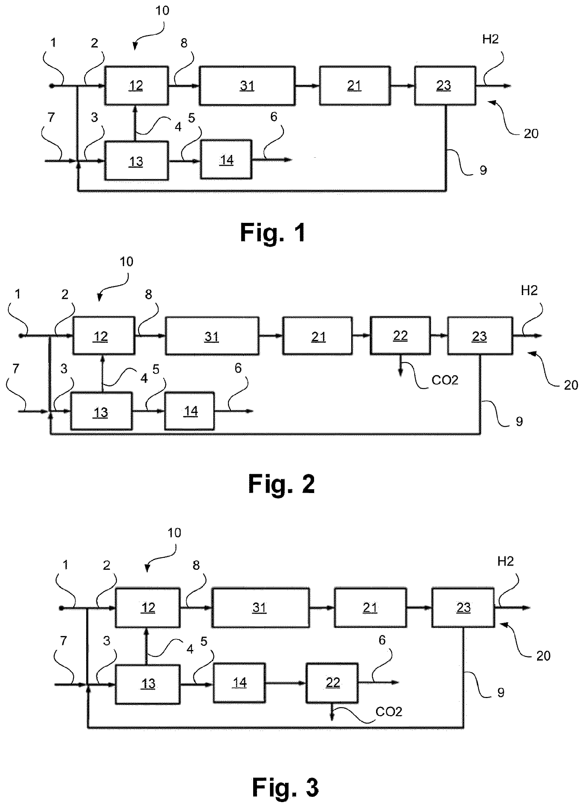

Ein entsprechendes Verfahren ist in der beigefügten Figur 1 veranschaulicht, auf die an dieser Stelle vorab Bezug genommen werden soll. Das Verfahren umfasst die Verwendung einer Reaktoranordnung 10, die im dargestellten Beispiel einen Reformierreaktor 12 aufweist, der überwiegend oder ausschließlich durch eine Verbrennung eines Brennstoffs bzw. Brenngases in einer Brenneranordnung 13 beheizt wird. Der Begriff "überwiegend" soll hier eine Bereitstellung von mindestens 90, 95 oder 99% in der jeweils genannten Weise bezeichnen.

In dem Verfahren gemäß Figur 1 wird im dargestellten Beispiel ein Erdgasstrom 1 bereitgestellt, der in Anteilen 2 und 3 in dem Reformierreaktor 12 als Einsatz verwendet und in der Brenneranordnung 13 verfeuert wird. Anstelle eines Erdgasstroms 1 kann beispielsweise ein Biogasstrom verwendet werden. Allgemein kann hier beispielsweise eine Mischung aus Methan, Kohlendioxid und anderen Gasen, aber auch beispielsweise Naphtha, verwendet werden. Es handelt sich also, wie auch unten angegeben, um einen Kohlenwasserstoff enthaltenen Feed zur Reformierung zu Synthesegas. Weitere, optional vorhandene Komponenten wie beispielsweise ein bekannter Präreformer sind hier nicht explizit gezeigt. Durch die Brenneranordnung 13 bereitgestellte Wärme ist mit 4 bezeichnet, ein Abgasstrom mit 5. Der Abgasstrom 5 wird einer Wärmerückgewinnung 14 zugeführt, aus der ein Kohlendioxid enthaltender Strom 6 ausgeführt werden kann. Der Brenneranordnung 13 wird außerdem Verbrennungsluft 7 zugeführt. Dem Reformierreaktor 12 zugeführter Dampf ist nicht gesondert veranschaulicht.

Der Reaktoranordnung 10 bzw. dem Reformierreaktor 12 wird ein Rohprodukt 8 entnommen und nach einer Wärmeintegration und Konditionierung 31 einer Aufbereitung 20 zugeführt. Die Aufbereitung umfasst hier eine Wassergasshift 21 und eine Überführung 23, z.B. unter Einsatz einer Druckwechseladsorption (PSA), zumindest eines Teils der in dem Produktgemisch enthaltenen Kohlenwasserstoffe in einen Restgasstrom 9, wobei ein Wasserstoffstrom H2 verbleibt. Der Wasserstoffstrom H2 kann unterschiedliche Qualitäten aufweisen (wie Druck, Zusammensetzung, z.B. 99 mol-%, 99,9 mol-%, 99,99 mol-% oder auch 99,999 mol-%). Der Restgasstrom 9 enthält insbesondere nicht umgesetzte Kohlenwasserstoffe, aber auch Wasserstoff und Kohlendioxid. Er kann insbesondere thermisch genutzt und in der Brenneranordnung 13 verbrannt werden, um den Reformierreaktor 12 zu beheizen.

Im Zuge der Klimadiskussion und entsprechender regulatorischer Maßnahmen bekommen Maßnahmen zur Vermeidung und Rückgewinnung von Kohlendioxid zunehmend an Bedeutung. Eine langfristig angestrebte Lösung kann beispielsweise die Gewinnung von Wasserstoff mittels Elektrolyse umfassen, die bei Einsatz von erneuerbaren Energiequellen kohlendioxidneutral sein kann, so dass entsprechend hergestellter Wasserstoff auch als "grün" bezeichnet wird.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird häufig auch von "blauem" Wasserstoff gesprochen.

Die Figuren 2 und 3 zeigen dabei zwei mögliche Alternativen der Kohlendioxidabtrennung, die jeweils mit 22 bezeichnet sind, und zwar im Prozessgasstrom 8 bzw. im kohlendioxidhaltigen Strom 6. Die Kohlendioxidabtrennung kann jeweils in fachüblicher Weise ausgeführt sein, beispielsweise als Aminwäsche. Die Kohlendioxidabtrennung 22 im Prozessgasstrom 8 kann insbesondere zur Abtrennung eines kohlendioxidreichen Stoffstroms CO2 verwendet werden, wobei der Restgasstrom 9 mit geringerem Kohlendioxidgehalt bereitgestellt werden kann. Die Kohlendioxidabtrennung kann jeweils in fachüblicher Weise ausgeführt sein, beispielsweise als Aminwäsche. Die Kohlendioxidabtrennung 22 im kohlendioxidhaltigen Strom 5, die hier stromab der Wärmerückgewinnung 14 veranschaulicht ist, kann insbesondere zur Bereitstellung eines an Kohlendioxid abgereicherten Stoffstroms 6 und eines kohlendioxidreichen Stoffstroms CO2 verwendet werden.

Eine sehr konkurrenzfähige Möglichkeit zur Reduktion von Kohlendioxidemissionen ist die bereits erwähnte Kohlendioxidabtrennung mit entsprechender (End-)Lagerung und/oder anderweitiger Verwertung (CCS, CCU). Hierbei müssen in den erläuterten Verfahren im Wesentlichen nur die verwendeten Brennstoffe (im Wesentlichen) decarbonisiert (d.h. kohlenstofffrei gewählt) werden, um Kohlendioxid im Abgas zu vermeiden. Eine Möglichkeit besteht im Verfeuern von Wasserstoff oder anderer kohlenstofffreier Brennstoffe wie Ammoniak. Die Herstellung solcher Brennstoffe ist jedoch teuer und energieaufwendig. Eine derzeit in intensiver Entwicklung befindliche Alternative ist daher der Ersatz der Feuerung durch eine elektrische Beheizung, wobei der erforderliche elektrische Strom vorteilhafterweise unter Verwendung von alternativen bzw. regenerativen Energiequellen bereitgestellt wird. In entsprechenden Ausgestaltungen kann der im Verfahren gewonnene Wasserstoff, da er nicht zum Teil verfeuert wird, für andere Zwecke genutzt werden, was bedeutet, dass sich die Wasserstoffausbeute, bezogen auf den Reaktionseinsatz, erhöht.

Wie in einschlägigen Veröffentlichungen erwähnt, z.B. bei Wismann et al., Science 2019, Band 364, Seiten 756-759, hat der Ersatz konventioneller Brenner durch elektrische Heizmittel in chemischen Reaktoren das Potenzial, die Kohlendioxidemissionen zu verringern und eine flexiblere und kompaktere Wärmeerzeugung zu ermöglichen. Zu den chemischen Reaktoren, die für eine entsprechende Modifikation in Frage kommen, gehören neben Rohrreaktoren in Dampfreformern auch Dampfspaltöfen und Reaktoren zur Dehydrierung von Alkanen.

Wie bei Wismann et al. und in einer Reihe von Veröffentlichungen der Anmelderin, wie z.B. EP 3 862 076 A1, beschrieben, besteht eine Möglichkeit, Reaktionsrohre in einem Rohrreaktor der genannten Art elektrisch zu beheizen, in der Widerstands- oder Joule-Beheizung. Bei der Widerstandsheizung wird ein elektrischer Strom durch die Reaktionsrohre geleitet, der die Rohrwand erwärmt. Die Widerstandsheizung wird auch als "direkte Beheizung" bezeichnet, da die Wärmeerzeugung "direkt" in den Reaktionsrohren stattfindet. Eine entsprechende direkte Beheizung kann auch dadurch erfolgen, dass ein Katalysator selbst widerstandserwärmt wird, wie beispielsweise bei Zhou et al., Applied Catalysis A: General 2008, Band 347, Seiten 200-209, beschrieben. Auch eine direkte Widerstandsbeheizung von Heizelementen bzw. Heizstäben ist möglich, die auch als Art von Zwischenüberhitzung erfolgen kann, der sich ein Katalysatorbett anschließt. Auch die Widerstandsbeheizung eines Katalysatorbetts kann in entsprechender Weise vorgenommen werden. In diesem Zusammenhang kann beispielsweise auf Druckschriften wie US 2016/0325990 A1, WO 2013/135660 A1 und WO 2019/228797 verwiesen werden.

Andere ("indirekte") Möglichkeiten zur Beheizung sind ebenfalls bekannt, wobei sich der Begriff "indirekt" insbesondere auf eine Wärmeübertragung durch Strahlung über einen Zwischenraum zwischen elektrischen Heizelementen und den zu beheizenden Reaktionsrohren beziehen kann, im Gegensatz zu einer oben erwähnten direkten elektrischen Beheizung, aber auch im Gegensatz zu anderen denkbaren Beheizungsformen mit Heizelementen in enge(re)m Kontakt mit den Reaktionsrohren, wie z.B. um die Reaktionsrohre herum oder in deren Nähe angeordnete Heizmanschetten oder Heizdrähte. Die indirekte oder Strahlungsbeheizung wird als besonders vorteilhaft angesehen, um eine Überhitzung des Reaktors zu vermeiden. Der Begriff "Ofen" wird für eine beheizte Reaktorkammer auch dann verwendet, wenn diese Kammer vollständig elektrisch beheizt wird.

Schließlich wurde auch die Induktionsheizung zur Erwärmung von Reaktionsrohren beschrieben, beispielsweise in Almind et al., Catalysis Today 2020, Band 342, Seiten 13-20, der WO 2019/186437 A1 und dem Abschlussbericht zu EUDP-Projekt 64013-0511 der dänischen Energieagentur.

Die vorliegende Erfindung stellt sich die Aufgabe, im Zusammenhang mit der elektrischen Beheizung bei Reformierreaktoren Verbesserungen zu schaffen.

### Offenbarung der Erfindung

Diese Aufgabe wird durch ein Verfahren und eine Anlage zur Herstellung eines zumindest Wasserstoff enthaltenden Produktgases durch Dampfreformierung mit den Merkmalen der unabhängigen Patentansprüche gelöst. Ausgestaltungen sind Gegenstand der abhängigen Patentansprüche sowie der nachfolgenden Beschreibung.

Die Lösung der vorliegenden Erfindung umfasst die Verwendung einer elektrifizierten Dampfreformierung, bei der ein Reaktanden, darunter zumindest Wasser und einen oder mehrere Kohlenwasserstoffe, enthaltender Prozessgasstrom durch eine Reaktoranordnung geführt wird, in welcher die aufzubringende Wärme zumindest zum Teil durch elektrischen Strom bereitgestellt wird. Hierbei können insbesondere elektrische Heizelemente verwendet werden, die im nachfolgend erläuterten Sinn in direktem Kontakt mit dem Prozessgasstrom stehen. Es können grundsätzlich aber auch Heizelemente in indirektem Kontakt verwendet werden.

Im Rahmen der vorliegenden Erfindung kann dabei eine Herstellung von Wasserstoff, aber auch eine Herstellung von Synthesegas und ggf. dessen Weiterverarbeitung im Vordergrund stehen. Mit dem Begriff Synthesegas wird hier ein Gasgemisch bezeichnet, dass überwiegend, d.h. zu mehr als 50, 60 oder 75%, die Komponenten Wasserstoff und Kohlenmonoxid enthält, aber auch Kohlendioxid enthalten kann. Je nach Bedarf kann durch eine Wassergasshift oder reverse Wassergasshift der Gehalt von Kohlenmonoxid zugunsten von Wasserstoff (und Kohlendioxid) verschoben werden oder umgekehrt. Auch eine Zudosierung von Komponenten ist möglich. Allgemein wird daher hier von einem "zumindest Wasserstoff enthaltenden Produktgas" gesprochen, wobei sich versteht, dass der Begriff "Produktgas" insbesondere auch ein Gasgemisch mit mehreren Komponenten bezeichnen kann.

Die Verwendung elektrischer Heizelemente in direktem Kontakt mit dem Prozessgas bietet mehrere Vorteile, unter anderem eine sehr effektive Wärmeübertragung und eine technisch relativ einfache Realisierung. Hierbei können die Heizelemente mit oder ohne metallische Schutzeinrichtung bereitgestellt werden. In allen Fällen werden hier aber sehr hohe Heizelementtemperaturen benötigt, um die erforderlichen Reaktoraustrittstemperaturen von ca. 850 °C bis zu ca. 1.000 °C (oder ggf. sogar mehr, beispielsweise bis zu 1.100 °C) zu erzielen.

Aufgrund von Verunreinigungen im Prozessgas wie höheren Kohlenwasserstoffen oder Kohlenmonoxid (die über den verwendeten Kohlenwasserstoffeinsatz, aber auch Dampf, Wasserstoff und ggf. Kohlendioxid eingetragen werden können) stellt die Verkokung der Heizelemente ein nicht unbeträchtliches Problem dar. Diese Verbindungen neigen zur Bildung von kohlenstoffhaltigen Ablagerungen bei deutlich niedrigeren Temperaturen als Methan. Sobald eine Verkokung eingesetzt hat, wird diese durch die dann erforderlichen, noch höheren Heizelementtemperaturen beschleunigt, sowie dadurch, dass existierende Verkokungen weitere Verkokungsreaktionen katalysieren.

Daher kann, wie im Rahmen der vorliegenden Erfindung erkannt wurde, die Verkokung zu einer reduzierten Leistung, einer Kurzschlussanfälligkeit und Problemen bei der Stromleitung und am Ende zu einer Reaktorblockade führen. Die im Rahmen von Ausgestaltungen der vorliegenden Erfindung vorgeschlagenen Maßnahmen überwinden diese Nachteile.

Im Rahmen der vorliegenden Erfindung wird daher ein Verfahren zur Herstellung eines zumindest Wasserstoff enthaltenden Produktgases durch Dampfreformierung vorgeschlagen, bei dem ein Dampf und einen oder mehrere Kohlenwasserstoffe als Reaktanden enthaltender Prozessgasstrom durch eine Reaktoranordnung geführt und in der Reaktoranordnung zumindest zum Teil elektrisch erwärmt wird, wobei die Reaktoranordnung mehrere Heizzonen aufweist, in denen der Prozessgasstrom auf in Strömungsrichtung ansteigende Temperaturniveaus erwärmt wird, und wobei zumindest eine der Heizzonen für die elektrische Erwärmung des Prozessgasstroms eingerichtet ist.

Durch die Verwendung ansteigender Temperaturniveaus kann im Rahmen der vorliegenden Erfindung die Verkokung von elektrischen Heizelementen verringert oder vermieden werden, selbst wenn die verwendeten Heizelemente in direktem Kontakt mit dem Einsatzgas stehen. Im Rahmen der vorliegenden Erfindung wird insbesondere eine Art Vor- bzw. Präreformierung oder Reformierung bei niedrigeren Temperaturen in einem ersten Schritt bzw. einer stromaufwärtigen Reaktionszone vorgenommen, gefolgt von einer Reformierung bei höheren Temperaturen in nachfolgenden Schritten bzw. stromabwärtigen Reaktionszonen.

Mit dem Begriff "Temperaturniveau" soll hier insbesondere ausgedrückt werden, dass die im Rahmen von Ausgestaltungen der vorliegenden Erfindung verwendeten Temperaturen nicht als exakte Temperaturwerte verwendet werden müssen, sondern jeweils in Bereichen gewisser Breite liegen können. Diese können beispielsweise Bereiche umfassen, die um 10 oder 15% nach oben und unten von einem Nominalwert abweichen können.

In einer Ausgestaltung der vorliegenden Erfindung kann vorgesehen sein, dass die mehreren Heizzonen wenigstens eine erste Heizzone, in der der Prozessgasstrom unter Verwendung von nichtelektrisch erzeugter Wärme (d.h. insbesondere mittels Brennern) aufgeheizt wird, und wenigstens eine zweite Heizzone, in der der Prozessgasstrom unter Verwendung elektrisch erzeugter Wärme aufgeheizt wird, umfassen. In dieser Ausgestaltung kann für die erstmalige Erwärmung also eine in geringerem Umfang verkokungsgefährdete Brennererwärmung verwendet werden. Koksbildende Komponenten können in der/den ersten Heizzone(n) auch zumindest zum Teil umgesetzt werden, bevor das Prozessgas die stromabwärtige(n) Heizzone(n) erreicht. Diese sind daher entsprechend vor Verkokungen geschützt.

In dieser oder in anderen Ausgestaltungen der vorliegenden Erfindung kann aber auch vorgesehen sein, dass der Prozessgasstrom in zumindest zwei der mehreren Heizzonen, d.h. insbesondere auch in allen Heizzonen, jeweils unter Verwendung von elektrisch erzeugter Wärme aufgeheizt wird. Hierbei kann insbesondere auch auf eine Vor- bzw. Präreformierung verzichtet werden. In diesem Fall können die Reformierungstemperaturprofile, und zwar in einem oder mehreren Reformierreaktoren, beispielsweise in drei Stufen durch serielle Anordnung der Heizelemente erzielt werden.

In einer ersten Stufe kann dabei das Prozessgas beispielsweise nur auf eine Temperatur von z.B. 500 °C in Kombination mit einem Reformierungskatalysator und Reaktion der schwereren Kohlenwasserstoffe zu Methan oder Synthesegas erwärmt werden. In einem zweiten Schritt wird die Temperatur z.B. auf 700 °C in Kombination mit einem Reformierungskatalysator erhöht. In einer letzten Stufe wird die gewünschte Reformierungsaustrittstemperatur von beispielsweise 850 °C bis möglicherweise mehr als 1.000 °C erreicht. In einer derartigen Ausgestaltung können die mehreren Heizzonen insbesondere in einer gemeinsamen Reaktoreinheit bzw. einem Reaktormantel aufgenommen sein und, allgemein gesprochen, können die verwendeten Temperaturniveaus zwischen 500 und 1.000 °C liegen, wobei die hier angegeben Temperaturen sich jeweils auf eine Austrittstemperatur des Gases aus entsprechenden Heizzonen beziehen. Alle Heizelemente können seriell in einem Reaktormantel installiert werden. Unterschiedliche Katalysatoren können eingesetzt werden, um auf diese Weise die Koksresistenz des ersten Bettes zu erhöhen.

In Ausgestaltungen der vorliegenden Erfindung werden die oben erläuterten Maßnahmen, oder ein Teil hiervon, mit weiteren Maßnahmen kombiniert, die insbesondere eine geeignete Beschichtung der verwendeten Heizelemente umfassen. In entsprechenden Ausgestaltungen können in der elektrischen Erwärmung Heizelemente eingesetzt werden, die, insbesondere in einer Beschichtung, eine oder mehrere Komponenten aufweisen, die aus einem oder mehreren Oxiden eines oder mehrerer Erdalkalimetalle, einem oder mehreren Metallen der Platingruppe, Nickel und Cobalt oder Kombinationen hiervon ausgewählt ist oder sind. Beispielsweise kann/können als Oxid(e) eines oder mehrerer Erdalkalimetalle Aluminium- oder Manganoxid eingesetzt werden. Nickel und Cobalt oder Kombinationen hiervon können insbesondere in Form geeigneter Reformierungskatalysatorformulierungen eingesetzt werden, um auf diese Weise eine entsprechende Umsetzung zu erzielen.

In Ausgestaltungen der vorliegenden Erfindung werden die oben erläuterten Maßnahmen, oder ein Teil hiervon, mit weiteren Maßnahmen kombiniert, die insbesondere eine geeignete Zusammensetzung des Prozessgasstroms umfassen. In einer Ausgestaltung kann dabei ein hohes Dampf-zu-Kohlenstoff-Verhältnis in dem Prozessgasstrom eingesetzt werden, das insbesondere 2 bis 4 betragen kann. Auch ist beispielsweise eine (hinsichtlich des Bedarfs in einer stromauf der Reaktoranordnung angeordneten Entschwefelung) überstöchiometrische Wasserstoffrückführung einsetzbar, um eine Reduktion der Verkokungen zu bewirken. Für eine Anwendung zur Erzeugung von Synthesegas oder Kohlenmonoxid und Wasserstoff (anstatt Wasserstoff als Endprodukt alleine), kann auch ein geringeres Dampf-zu-Kohlenstoff-Verhältnis von beispielsweise 1,5 bis 2 verwendet werden. In einer derartigen Anwendung kann der Prozessgasstrom bzw. das Produktgas auch mit zusätzlichem Kohlendioxid angereichert werden, um beispielsweise ein Verhältnis von Wasserstoff zu Kohlenmonoxid von ca. 1,2 oder auch eine Stöchiometriezahl von 2 oder leicht darüber, beispielsweise etwa 2,05, zu erhalten. Zum Begriff der Stöchiometriezahl wird auf einschlägige Literatur, beispielsweise Kiendl et al., "Investigation of Methanol and Direct Dimethyl Ether Synthesis in Laboratory and Technical Scale", Chemie Ingenieur Technik 2020, Band 92, Ausgabe 6, Seiten 736 bis 745, verwiesen.

Wie bereits mehrfach erwähnt, eignet sich die vorliegende Erfindung in besonderer Weise dann, wenn ein direkter Kontakt zwischen Heizelementen und dem Prozessgas besteht. Ein entsprechendes Verfahren umfasst insbesondere, dass eine strombeaufschlagte Einheit eines oder mehrerer für die elektrische Erwärmung verwendeter Heizelemente in direktem Kontakt mit dem Prozessgasstrom steht. Es ist jedoch auch möglich, dass eine strombeaufschlagte Einheit eines oder mehrerer für die elektrische Erwärmung verwendeter Heizelemente in indirektem Kontakt mit dem Prozessgasstrom steht. Auch Kombinationen sind möglich.

In Ausgestaltungen der vorliegenden Erfindung kann das Produktgas als Wasserstoff und Kohlenmonoxid enthaltendes Synthesegas bereitgestellt werden, wobei das Synthesegas mit einem vorgegebenen Verhältnis von Wasserstoff zu Kohlenmonoxid und/oder einer vorgegebenen Stöchiometriezahl bereitgestellt und/oder durch Zugabe oder Abtrennung von Kohlendioxid auf ein vorgegebenes Verhältnis von Wasserstoff zu Kohlenmonoxid und/oder eine vorgegebene Stöchiometriezahl eingestellt werden kann, wie bereits oben erläutert. Eine entsprechende Zugabe erfolgt an beliebiger Stelle zu dem Prozessgasstrom oder auch an mehreren Stellen. Es versteht sich, das Kohlendioxid auch bereits in einem Einsatzgas enthalten sein kann, beispielsweise dann, wenn Biogas eingesetzt wird. Es kann daher auch vorgesehen sein, Kohlendioxid abzutrennen, wenn dessen Gehalt höher als gewünscht ist, beispielsweise mittels einer Membrantrennung. Auf diese Weise kann das gewünschte Verhältnis von Kohlendioxid, Kohlenwasserstoffen und Dampf eingestellt werden. Das Produktgas kann in Ausgestaltungen der vorliegenden Erfindung zu einem Folgeprodukt weiterverarbeitet werden. Die Erfindung betrifft in derartigen Ausgestaltungen ein Verfahren zur Bereitstellung des Produktgases und des Folgeprodukts. Insbesondere bei einer Stöchiometriezahl von etwa 2 kann das Produktgas bzw. ein Prozessgasstrom zur Synthese von Methanol und/oder Dimethylether eingesetzt werden. Bei einem Verhältnis von Wasserstoff zu Kohlenmonoxid von 1 oder 2 eignet sich das Produktgas bzw. der Prozessgasstrom insbesondere für eine nachfolgende Oxosynthese. Eine weitere Anwendung ist insbesondere eine Fischer-Tropsch Synthese.

Eine Anlage zur Herstellung eines zumindest Wasserstoff enthaltenden Produktgases durch Dampfreformierung, die eine Reaktoranordnung und Mittel, die dafür eingerichtet sind, einen Dampf und einen oder mehrere Kohlenwasserstoffe als Reaktanden enthaltenden Prozessgasstrom durch die Reaktoranordnung zu führen und in der Reaktoranordnung zumindest zum Teil elektrisch zu erwärmen, aufweist, ist ebenfalls Gegenstand der vorliegenden Erfindung. Die Reaktoranordnung weist mehrere Heizzonen auf, die dafür eingerichtet sind, den Prozessgasstrom auf in Strömungsrichtung ansteigende Temperaturniveaus zu erwärmen, und wobei zumindest eine der Heizzonen für die elektrische Erwärmung des Prozessgasstroms eingerichtet ist.

Zu weiteren Merkmalen und den Vorteilen einer entsprechenden Anlage sei auf die obigen Erläuterungen zu dem erfindungsgemäßen Verfahren und seiner Ausgestaltungen ausdrücklich verwiesen, zu dessen Durchführung eine entsprechende Anlage eingerichtet sein kann.

Die erfindungsgemäß vorgesehenen Maßnahmen vergrößern insbesondere die Vorteile einer elektrisch beheizten Dampfreformierung wie reduzierte Kohlendioxidproduktion insgesamt und hohe Wiedergewinnungsraten (und damit geringe Emissionen). Mit der vorliegenden Erfindung wird insbesondere eine einfache und kostengünstige Lösung für die Vergrößerung der Verkokungsresistenz bereitgestellt, die eine zuverlässige Konstruktion nach dem neuesten Stand der Technik (Heizelemente, Katalysator, Präreformerkonzept) ermöglicht. Vorteile sind ferner eine kompakte Bauweise und optimierte Heizstufen pro Zone.

Die Erfindung wird nachfolgend unter Bezugnahme auf die beigefügten Zeichnungen weiter erläutert, die Ausgestaltungen der vorliegenden Erfindung veranschaulichen.

Kurze Beschreibung der Zeichnungen
Figuren 1 bis 3 veranschaulichen nicht erfindungsgemäße Verfahren.
Figuren 4 und 5 veranschaulichen Verfahren gemäß Ausgestaltungen der Erfindung.

In den Figuren sind einander baulich und/oder funktional entsprechende Komponenten mit identischen Bezugszeichen angegeben und werden lediglich der Übersichtlichkeit halber nicht wiederholt erläutert. Wird nachfolgend auf Verfahrensschritte Bezug genommen, gelten die entsprechenden Erläuterungen für entsprechende Anlagenkomponenten in gleicher Weise und umgekehrt.

### Ausführliche Beschreibung der Zeichnungen

Die Figuren 1 bis 3 wurden bereits eingangs erläutert.

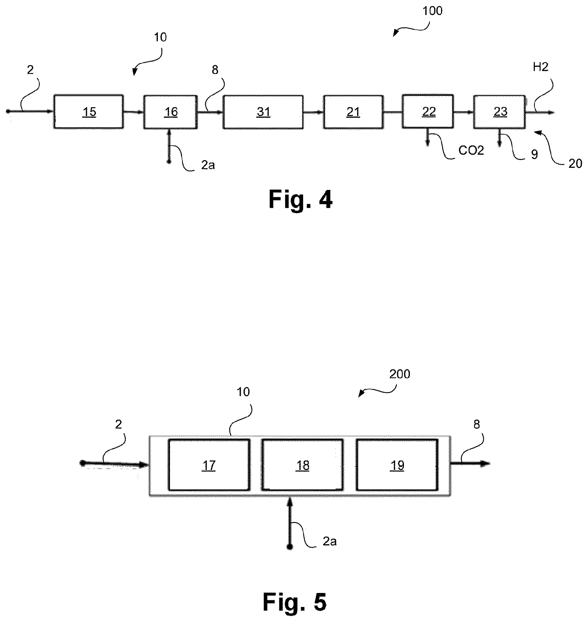

In den Figuren 4 und 5 sind Verfahren gemäß Ausgestaltungen der Erfindung veranschaulicht und insgesamt mit 100 und 200 bezeichnet. In diesen Ausgestaltungen werden abweichend zu den Figuren 1 bis 3 Reaktoranordnungen 10 mit unterschiedlichen Teilreaktoren 15 und 16 bzw. Reaktionszonen 17 bis 19 verwendet, die hier auch als Heizzonen bezeichnet werden. Der Teilreaktor 16 und die Heizzonen 17 bis 19 werden überwiegend oder ausschließlich elektrisch beheizt. Elektrischer Strom ist jeweils mit 2a bezeichnet. Der in Figur 4 veranschaulichte Teilreaktor 15 wird dagegen überwiegend oder ausschließlich durch Verbrennung eines Brennstoffs beheizt und dient insbesondere zur Durchführung einer Prä- bzw. Vorreformierung auf einem niedrigeren Temperaturniveau, um Verkokungen zu vermeiden. Auch eine umgekehrte Ausgestaltung in dem Sinne, dass der Teilreaktor 15 überwiegend oder ausschließlich elektrisch und der Teilreaktor 16 überwiegend oder ausschließlich durch Verbrennung eines Brennstoffs beheizt wird, ist möglich. Auch in allen anderen hier beschriebenen Ausgestaltungen können derartige unterschiedliche Anordnungen vorgesehen sein.

In Figur 5 ist lediglich die Reaktoranordnung 10 mit den Reaktionszonen 17 bis 19 dargestellt, nicht dagegen die stromabwärtigen Einrichtungen. Diese können wie zuvor diskutiert ausgebildet sein. Wie in Figur 5 anhand des Verfahrens 200 veranschaulicht, können die Heizzonen 17 bis 19 in einer gemeinsamen Reaktorhülle, die hier die Reaktoranordnung 10 bildet, angeordnet sein.

## Patentansprüche

1. Verfahren (100, 200) zur Herstellung eines zumindest Wasserstoff enthaltenden Produktgases durch Dampfreformierung, bei dem ein Dampf und einen oder mehrere Kohlenwasserstoffe als Reaktanden enthaltender Prozessgasstrom durch eine Reaktoranordnung (10) geführt und in der Reaktoranordnung (10) zumindest zum Teil elektrisch erwärmt wird, wobei die Reaktoranordnung (10) mehrere Heizzonen (15-19) aufweist, in denen der Prozessgasstrom auf in Strömungsrichtung ansteigende Temperaturniveaus erwärmt wird, und wobei zumindest eine der Heizzonen (15-19) für die elektrische Erwärmung des Prozessgasstroms eingerichtet ist.

2. Verfahren (100) nach Anspruch 1, bei dem die mehreren Heizzonen (15-19) wenigstens eine erste Heizzone (15), in der der Prozessgasstrom unter Verwendung von nichtelektrisch erzeugter Wärme aufgeheizt wird, und wenigstens eine zweite Heizzone (16), in der der Prozessgasstrom unter Verwendung elektrisch erzeugter Wärme aufgeheizt wird, umfassen.

3. Verfahren (100) nach Anspruch 2, bei dem die nichtelektrisch erzeugte Wärme mittels Brenngas erzeugte Wärme ist oder umfasst.

4. Verfahren (200) nach Anspruch 1, bei dem der Prozessgasstrom in zumindest zwei der mehreren Heizzonen (17-19) jeweils unter Verwendung von elektrisch erzeugter Wärme aufgeheizt wird.

5. Verfahren (200) nach Anspruch 4, bei dem die mehreren Heizzonen (17-19) in einer gemeinsamen Reaktoreinheit (11) aufgenommen sind.

6. Verfahren (100, 200) nach einem der vorstehenden Ansprüche, bei dem Temperaturniveaus zwischen 500 und 1.000 °C liegen.

7. Verfahren (100, 200) nach einem der vorstehenden Ansprüche, bei dem bei der elektrischen Erwärmung Heizelemente eingesetzt werden, die eine oder mehrere Komponenten aufweisen, die aus einem oder mehreren Oxiden eines oder mehrerer Erdalkalimetalle, einem oder mehreren Metallen der Platingruppe, Nickel und Cobalt oder Kombinationen hiervon ausgewählt ist oder sind.

8. Verfahren (100, 200) einem der vorstehenden Ansprüche, bei dem ein Dampf-zu-Kohlenstoff-Verhältnis in dem Prozessgasstrom 1,5 bis 4 beträgt.

9. Verfahren (100, 200) nach einem der vorstehenden Ansprüche, bei dem eine strombeaufschlagte Einheit eines oder mehrerer für die elektrische Erwärmung verwendeter Heizelemente in direktem Kontakt mit dem Prozessgasstrom steht.

10. Verfahren (100, 200) nach einem der vorstehenden Ansprüche, bei dem eine strombeaufschlagte Einheit eines oder mehrerer für die elektrische Erwärmung verwendeter Heizelemente in indirektem Kontakt mit dem Prozessgasstrom steht.

11. Verfahren (100, 200) nach einem der vorstehenden Ansprüche, bei dem das Produktgas als Wasserstoff und Kohlenmonoxid enthaltendes Synthesegas bereitgestellt wird, wobei das Synthesegas mit einem vorgegebenen Verhältnis von Wasserstoff zu Kohlenmonoxid und/oder einer vorgegebenen Stöchiometriezahl bereitgestellt und/oder durch Zugabe oder Abtrennung von Kohlendioxid auf ein vorgegebenes Verhältnis von Wasserstoff zu Kohlenmonoxid und/oder eine vorgegebene Stöchiometriezahl eingestellt wird.

12. Verfahren (100, 200) nach einem der vorstehenden Ansprüche, bei dem das Produktgas zu einem Folgeprodukt weiterverarbeitet wird.

13. Anlage zur Herstellung eines zumindest Wasserstoff enthaltenden Produktgases durch Dampfreformierung, die eine Reaktoranordnung (10) und Mittel, die dafür eingerichtet sind, einen Dampf und einen oder mehrere Kohlenwasserstoffe als Reaktanden enthaltenden Prozessgasstrom durch die Reaktoranordnung (10) zu führen und in der Reaktoranordnung (10) zumindest zum Teil elektrisch zu erwärmen aufweist, wobei die Reaktoranordnung (10) mehrere Heizzonen (15-19) aufweist, die dafür eingerichtet sind, den Prozessgasstrom auf in Strömungsrichtung ansteigende Temperaturniveaus zu erwärmen, und wobei zumindest eine der Heizzonen (15-19) für die elektrische Erwärmung des Prozessgasstroms eingerichtet ist.

14. Anlage nach Anspruch 13, die zur Durchführung eines Verfahrens nach einem der Ansprüche 1 bis 12 eingerichtet ist.
